# EUROPEAN PATENT APPLICATION

(11) **EP 4 656 440 A1**
(43) Date of publication of application: **03.12.2025**
(21) Application number: 25176060.9
(22) Date of filing: 13.05.2025
(51) Int. Cl.: B60L 50/60, B60R 16/02, B60L 1/00, B60K 1/00, B60K 1/04

(54) **BATTERY ELECTRIC VEHICLE**

(30) Priority: 27.05.2024 JP 2024085606
(71) Applicant: TOYOTA JIDOSHA KABUSHIKI KAISHA, Toyota-shi, Aichi-ken 471-8571 (JP)
(72) Inventor: MURASE, Eiji, TOYOTA-SHI, AICHI-KEN, 471-8571 (JP); ICHIKAWA, Akitaka, TOYOTA-SHI, AICHI-KEN, 471-8571 (JP)
(74) Representative: Cabinet Beau de Loménie

(57) **Abstract**

A battery electric vehicle includes a battery (14), right and left front wheels (10), a drive unit (20), a power conversion device (19) that converts power stored in the battery and supplies the converted power to the drive unit, and a first electrical component (15) that operates using electricity stored in the battery. The battery (14) houses multiple battery cells and is disposed between a driver's seat (12) and a front passenger seat so as to extend from a front end to a rear end of the passenger compartment. The drive unit (20) has a single-axial structure in which a speed reducer and a drive shaft are disposed on a rotation axis of a motor, and is disposed between the front wheels (10). The power conversion device (19) is disposed above the drive unit (20). The first electrical component (15) is disposed above the power conversion device (19).

## Description

### BACKGROUND

### 1. Field

The present disclosure relates to a battery electric vehicle.

### 2. Description of Related Art

Japanese Laid-Open Patent Publication No. 2023-520139 discloses a battery electric vehicle. In this battery electric vehicle, a battery is disposed between a driver's seat and a front passenger seat.

There is a demand for battery electric vehicles of the sports car type. In a battery electric vehicle, achieving proportions suitable for a sports car requires lowering the height of the front portion of the vehicle, which is located forward of the driver's seat and the front passenger seat. Additionally, lowering the seating position within the passenger compartment is desirable.

In a battery electric vehicle, devices that utilize electricity stored in the battery are connected to the battery via harnesses. Devices that use electricity stored in the battery may be connected to each other via harnesses. In a limited vehicle interior space, in order to reduce harness routing length, there is room for design improvements in the layout.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a battery electric vehicle includes a battery, right and left front wheels configured to be driven by electricity stored in the battery, a drive unit including a motor and a speed reducer configured to transmit rotation generated by the motor to a drive shaft, a power conversion device configured to convert power stored in the battery and supply the converted power to the drive unit, and a first electrical component that is an electronic device configured to operate using the electricity stored in the battery. The battery accommodates multiple battery cells, and is disposed between a driver's seat and a front passenger seat so as to extend from a front end to a rear end of the passenger compartment. The drive unit has a single-axis structure in which the speed reducer and the drive shaft are disposed on a rotation axis of the motor, and is disposed between the front wheels. The power conversion device is disposed above the drive unit. The first electrical component is disposed above the power conversion device.

Other features and aspects will be apparent from the following detailed description, the drawings, and the claims.

### BRIEF DESCRIPTION OF THE DRAWINGS

Fig. 1 is a schematic diagram of an arrangement of a battery and devices around the battery when a battery electric vehicle according to an embodiment is viewed from above.
Fig. 2 is a schematic diagram of the battery electric vehicle shown in Fig. 1, illustrating the arrangement of the battery and the devices around the battery when the battery electric vehicle is viewed from the side.
Fig. 3 is a schematic diagram of a drive unit provided in the battery electric vehicle shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

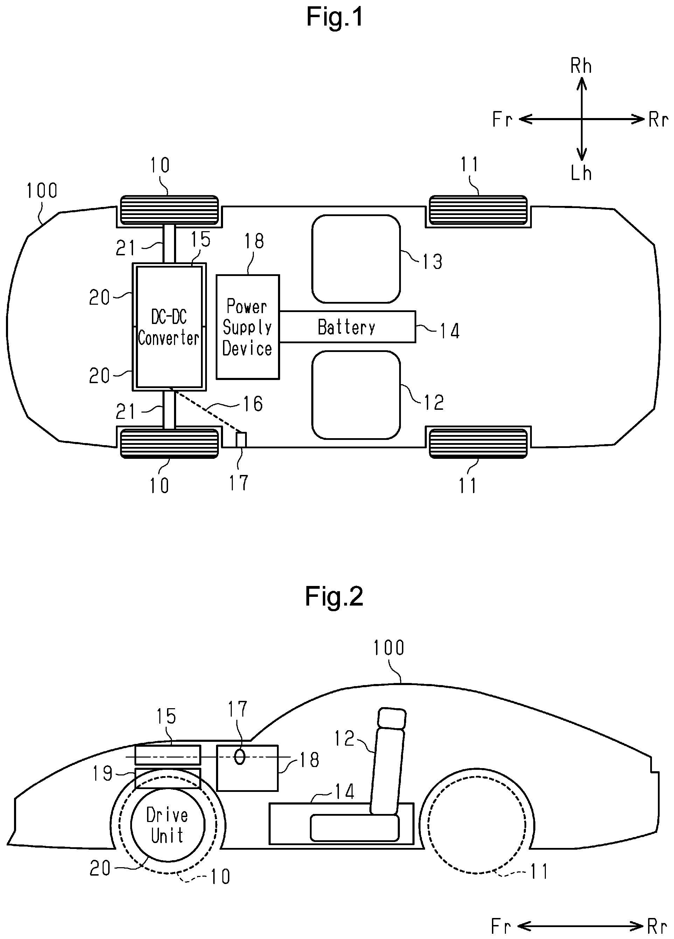

A battery electric vehicle 100 according to an embodiment will now be described with reference to Figs. 1 to 3.

In the following description, terms related to orientations or directions, such as "front", "rear", "upper", "lower", "right", and "left", are defined based on the battery electric vehicle 100.

In Figs. 1 and 2, "Fr" indicates the front direction of the battery electric vehicle 100. In Figs. 1 and 2, "Rr" indicates the rear direction of the battery electric vehicle 100. In Fig. 1, "Rh" indicates the right side as viewed from an occupant facing forward in the battery electric vehicle 100. In Fig. 1, "Lh" indicates the left side as viewed from an occupant facing forward in the battery electric vehicle 100.

### Arrangement of a Battery 14 and Drive Units 20

Fig. 1 shows an arrangement of the battery 14 and devices around the battery 14 when the battery electric vehicle 100 is viewed from above. Fig. 2 shows the arrangement of the battery 14 and the devices around the battery 14 when the battery electric vehicle 100 is viewed from the left side in Fig. 1.

As shown in Fig. 1, the battery electric vehicle 100 includes the battery 14. As shown in Figs. 1 and 2, the battery 14 is disposed between a driver's seat 12 and a front passenger seat 13 so as to extend from a front end to a rear end of a passenger compartment. The battery 14 houses multiple battery cells. The battery 14 stores electricity in the battery cells.

As shown in Fig. 1, the drive units 20 are disposed between right and left front wheels 10. As shown in Fig. 1, in the battery electric vehicle 100, one drive unit 20 is disposed on each of the right side and the left side in Fig. 1 with respect to the center in the vehicle width direction. In Fig. 1, the drive unit 20 disposed on the right side is connected to the right front wheel 10 through a drive shaft 21. In Fig. 1, the drive unit 20 disposed on the left side is connected to the left front wheel 10 through a drive shaft 21.

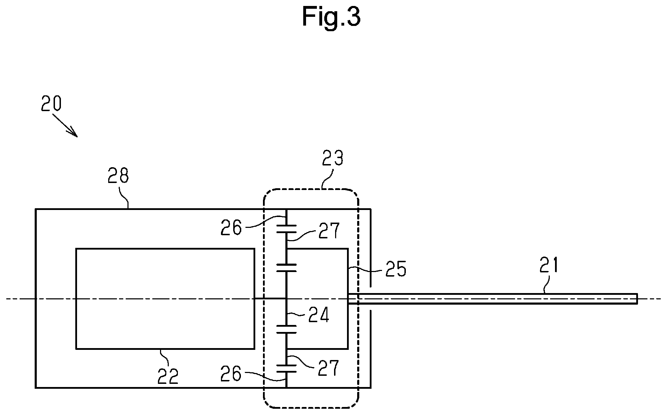

Fig. 3 shows a configuration of one of the drive units 20, included in the battery electric vehicle 100.

As shown in Fig. 3, each drive unit 20 includes a motor 22 and a speed reducer 23. In the drive unit 20, the motor 22 and the speed reducer 23 are surrounded by a housing 28.

As shown in Fig. 3, the speed reducer 23 includes a sun gear 24, a planetary carrier 25 rotatably supporting multiple pinions 27, and a ring gear 26. In other words, the speed reducer 23 includes a planetary gear mechanism.

As shown in Fig. 3, in the drive unit 20, the motor 22 is connected to the sun gear 24 of the speed reducer 23. In the speed reducer 23, the pinions 27 supported by the planetary carrier 25 are disposed between the sun gear 24 and the ring gear 26. The pinions 27 mesh with both the sun gear 24 and the ring gear 26. In the speed reducer 23, the ring gear 26 is fixed to the housing 28.

As shown in Fig. 3, the drive shaft 21 is connected to the planetary carrier 25. Accordingly, in the drive unit 20, rotation generated by the motor 22 is transmitted to the sun gear 24, the planetary carrier 25, and the drive shaft 21, in that order. At this time, since the sun gear 24, the pinions 27, and the ring gear 26 have different numbers of teeth, the rotation generated by the motor 22 is decelerated before being transmitted to the drive shaft 21. Thus, the speed reducer 23 reduces the speed of the rotation generated by the motor 22 and transmits the decelerated rotation to the drive shaft 21.

The long-dash short-dash line in Fig. 3 indicates a rotation axis of the motor 22. As shown in Fig. 3, in the drive unit 20, the speed reducer 23, and the drive shaft 21 are disposed on the rotation axis of the motor 22. In other words, the rotation axis of the motor 22, the rotation axis of the speed reducer 23, and the rotation axis of the drive shaft 21 are arranged on one straight line. Therefore, the drive unit 20 has a single-axis structure having a single rotation axis.

In the battery electric vehicle 100, the front wheels 10 are drive wheels. In Fig. 1, the drive unit 20 disposed on the right side rotates the right front wheel through the corresponding drive shaft 21. In Fig. 1, the drive unit 20 disposed on the left side rotates the left front wheel through the corresponding drive shaft 21.

### Arrangement of a Power Conversion Device 19 and a First Electrical Component

As shown in Fig. 2, the power conversion device 19 is disposed above the drive units 20.

The battery 14 stores DC electricity in the battery cells. The DC electricity stored in the battery 14 is supplied to the power conversion device 19. The power conversion device 19 converts DC power supplied from the battery 14 into AC power. The power conversion device 19 supplies the converted AC power to the drive units 20.

In this manner, the electricity stored in the battery 14 is supplied to the drive units 20 after being converted into AC by the power conversion device 19. The drive units 20 supplied with electricity from the battery 14 via the power conversion device 19 rotate the front wheels 10 through the drive shafts 21. In this manner, the battery electric vehicle 100 drives the front wheels 10, which are the drive wheels, by the electricity stored in the battery 14.

In the battery electric vehicle 100, the first electrical component is disposed above the power conversion device 19. The first electrical component is an electronic device that operates using the electricity stored in the battery 14.

As shown in Fig. 2, a DC-DC converter 15 is disposed above the power conversion device 19. In the battery electric vehicle 100 according to the present embodiment, the first electrical component is the DC-DC converter 15. The DC-DC converter 15 has a function of charging the battery 14 with electricity from the outside.

As shown in Fig. 1, the DC-DC converter 15 is connected to a charging port 17 by a charging harness 16. In Fig. 2, the long-dash double-short-dash line on the charging port 17 represents the position of the center of the charging port 17 in the height direction. As shown in Fig. 2, the position of the center of the charging port 17 in the height direction is between the upper end and the lower end of the DC-DC converter 15. In other words, the charging port 17 is disposed at a height at which the DC-DC converter 15 is located.

The charging port 17 is a connection port for supplying electricity from the outside to the DC-DC converter 15. The charging harness 16 is a harness for supplying electricity supplied from the charging port 17 to the DC-DC converter 15. DC electricity is supplied to the charging port 17 from the outside. For example, a plug of a rapid charging station is connected to the charging port 17. The DC electricity supplied from the plug to the charging port 17 is supplied to the DC-DC converter 15 through the charging harness 16.

The DC-DC converter 15 increases the voltage of the electricity supplied through the charging harness 16. The DC-DC converter 15 supplies the electricity having the increased voltage to the battery 14. In this manner, the DC-DC converter 15 increases the voltage of the electricity from the outside and supplies the electricity to the battery 14.

### Arrangement of a Second Electrical Component

In the battery electric vehicle 100, the second electrical component is disposed rearward of the first electrical component. The second electrical component is an electronic device that operates using the electricity stored in the battery 14 and is different from the first electrical component.

As shown in Fig. 2, a power supply device 18 is disposed rearward of the DC-DC converter 15, which is the first electrical component. In the battery electric vehicle 100 according to the present embodiment, the second electrical component is the power supply device 18.

Multiple devices included in the battery electric vehicle 100 are connected to the power supply device 18 through harnesses. For example, the power supply device 18 is connected to lighting systems, a monitor for a car navigation system, and other devices. The power supply device 18 distributes and supplies the power from the battery 14 to each device connected to the power supply device 18. The power supply device 18 may convert the power in the battery 14 and then supply the power to each device.

Similarly to the DC-DC converter 15, the power supply device 18 may charge the battery 14 with power from the outside. At this time, the power supply device 18 converts AC power supplied from the outside into DC power. The power supply device 18 supplies the converted DC power to the battery 14. For example, the power supply device 18 converts, into DC power, AC power supplied from a charging outlet installed in a residential setting for charging the battery electric vehicle 100, and supplies the converted power to the battery 14.

In the battery electric vehicle 100, the power supply device 18, the first electrical component, and the second electrical component use the electricity stored in the battery 14. Accordingly, the power supply device 18, the first electrical component, and the second electrical component are connected to the battery 14 through harnesses. The power supply device 18, the first electrical component, and the second electrical component are clustered in a front portion of the battery electric vehicle 100.

### Operation of the Present Embodiment

In the battery electric vehicle 100, the battery 14 is disposed between the driver's seat 12 and the front passenger seat 13. As a result, the seating position is lower than in a configuration in which the battery 14 is mounted beneath the floor of the driver's seat 12 and the front passenger seat 13.

In the battery electric vehicle 100, devices that utilize electricity stored in the battery 14 are connected to the battery 14 via harnesses. Devices that use electricity stored in the battery 14 may be connected to each other via harnesses. The devices that use the electricity stored in the battery 14 are clustered at positions as close to each other as possible, so that the routing lengths of the harnesses are reduced. In the battery electric vehicle 100, the power conversion device 19 and the first electrical component are clustered above the drive units 20.

Each drive unit 20 of the battery electric vehicle 100 has a single-axis structure rather than a multi-axis structure. In the drive unit 20, having a single-axial structure, the motor 22 and the speed reducer 23 are arranged on the rotation axis of the motor 22. The drive units 20, which have a single-axis structure, has a larger dimension in the width direction than a drive unit having a multi-axis structure. However, the drive units 20 have a compact dimension in the longitudinal direction and the vertical direction. This configuration increases the space above the drive units 20 of the battery electric vehicle 100 compared to a case in which each drive unit 20 has a multi-axis structure. In the battery electric vehicle 100, the power conversion device 19 and the first electrical component are disposed in the space resulting from the compact design of the drive units 20.

### Advantages of the Present Embodiment

(1) The battery electric vehicle 100 reduces the harness routing length, while maintaining the proportion suitable for a sports car.
(2) The first electrical component is the DC-DC converter 15, which increases the voltage of electricity from the outside and supplies the electricity to the battery 14.
(3) The battery electric vehicle 100 includes the charging port 17, which is a connection port for supplying electricity from the outside to the DC-DC converter 15. The charging port 17 is disposed at the height at which the DC-DC converter 15 is located.
   The DC-DC converter 15 supplies power supplied from the outside through the charging port 17 to the battery 14. In the battery electric vehicle 100, the distance between the charging port 17 and the DC-DC converter 15 is reduced by disposing the charging port 17 at the height at which the DC-DC converter 15 is located. Accordingly, the battery electric vehicle 100 shortens the charging harness 16, which is a harness connecting the charging port 17 to the DC-DC converter 15.
(4) The battery electric vehicle 100 includes the second electrical component. The second electrical component is an electronic device that operates using the electricity stored in the battery 14 and is different from the first electrical component. The second electrical component is disposed rearward of the first electrical component.
   As described above, the drive units 20, which have a single-axis structure, have a compact dimension in the longitudinal direction and the vertical direction as compared to drive units having a multi-axis structure. This configuration increases the space rearward of the drive units 20 of the battery electric vehicle 100 compared to a case in which each drive unit 20 has a multi-axis structure. In the battery electric vehicle 100, the power conversion device 19, the first electrical component, and the second electrical component are clustered by disposing the second electrical component in a space resulting from the compact design of the drive units 20. Accordingly, the battery electric vehicle 100 further reduces the harness routing length, while maintaining the proportion suitable for a sports car.
(5) In the battery electric vehicle 100, the second electrical component is the power supply device 18. The power supply device 18 distributes and supplies the power from the battery 14 to each device connected to the power supply device 18.

### Modifications

The above-described embodiment may be modified as follows. The above-described embodiment and the following modifications can be combined as long as the combined modifications remain technically consistent with each other.

In the above-described battery electric vehicle 100, as shown in Fig. 1, the driver's seat 12 is disposed on the left side in Fig. 1, and the front passenger seat 13 is disposed on the right side in Fig. 1. The arrangement of the driver's seat 12 and the front passenger seat 13 may be reversed from that in Fig. 1.

In the above-described battery electric vehicle 100, the front wheels 10 are drive wheels. The battery electric vehicle 100 may also be a four-wheel-drive vehicle in which, in addition to the front wheels 10, the rear wheels 11 are also driven.

In the above-described battery electric vehicle 100, the charging port 17 is disposed at the height at which the DC-DC converter 15 is located. The charging port 17 included in the battery electric vehicle 100 does not necessarily need to be disposed at the height at which the DC-DC converter 15 is located.

In the above-described battery electric vehicle 100, DC electricity from the outside is supplied to the charging port 17. In addition to DC electricity, the charging port 17 may be supplied with AC electricity supplied from a charging outlet installed in a residential setting for charging the battery electric vehicle 100.

In the above-described battery electric vehicle 100, the charging port 17 is disposed on the left side in Fig. 1. In the battery electric vehicle 100, the charging port 17 may be disposed on the right side in Fig. 1.

The above-described battery electric vehicle 100 includes the second electrical component in addition to the first electrical component. The battery electric vehicle 100 does not necessarily need to include the second electrical component.

In the above-described battery electric vehicle 100, the second electrical component is disposed rearward of the first electrical component. The position of the second electrical component in the battery electric vehicle 100 is not limited to the above-described embodiment. For example, the second electrical component may be disposed forward of the first electrical component.

In the above-described battery electric vehicle 100, the second electrical component is an electronic device of a different type from the first electrical component. The second electrical component may be an electronic device of the same type as the first electrical component.

In the above-described battery electric vehicle 100, the first electrical component is the DC-DC converter 15. The first electrical component does not necessarily need to be the DC-DC converter 15.

In the above-described battery electric vehicle 100, the second electrical component is the power supply device 18. The second electrical component does not necessarily need to be the power supply device 18.

In the above-described battery electric vehicle 100 described above, the first electrical component is the DC-DC converter 15, and the second electrical component is the power supply device 18. Alternatively, in the battery electric vehicle 100, the first electrical component may be the power supply device 18, and the second electrical component may be the DC-DC converter 15. In other words, in the battery electric vehicle 100, the positions of the DC-DC converter 15 and the power supply device 18 may be reversed.

The above-described battery electric vehicle 100 includes two drive units 20, that is, the drive unit 20 connected to the right front wheel and the drive unit 20 connected to the left front wheel. The configuration of the drive units 20 included in the battery electric vehicle 100 is not limited to the above-described embodiment.

For example, the battery electric vehicle 100 may include a single drive unit 20 connected to both the right front wheel and the left front wheel, instead of including two drive units 20. Hereinafter, the battery electric vehicle 100 including such a single drive unit 20 will be referred to as a battery electric vehicle 100 of a first modification.

For example, the battery electric vehicle 100 may include a single drive shaft 21 that extends along the rotation axes of the motors 22 respectively included in the two right and left drive units 20. Hereinafter, the battery electric vehicle 100 including such drive units 20 will be referred to as a battery electric vehicle 100 of a second modification.

The configuration of each drive unit 20 included in the battery electric vehicle 100 is not limited to the that shown in Fig. 3. For example, the drive units 20 included in the battery electric vehicles 100 of the first modification and the second modification may each include a differential gear in addition to the motor 22 and the speed reducer 23.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A battery electric vehicle (100), comprising:
a battery (14);
right and left front wheels (10) configured to be driven by electricity stored in the battery (14);
a drive unit (20) including a motor (22) and a speed reducer (23) configured to transmit rotation generated by the motor (22) to a drive shaft (21);
a power conversion device (19) configured to convert power stored in the battery (14) and supply the converted power to the drive unit (20); and
a first electrical component (15) that is an electronic device configured to operate using the electricity stored in the battery (14), wherein
the battery (14) accommodates multiple battery cells, and is disposed between a driver's seat (12) and a front passenger seat (13) so as to extend from a front end to a rear end of a passenger compartment,
the drive unit (20) has a single-axis structure in which the speed reducer (23) and the drive shaft (21) are disposed on a rotation axis of the motor (22), and is disposed between the front wheels (10),
the power conversion device (19) is disposed above the drive unit (20), and
the first electrical component (15) is disposed above the power conversion device (19).

2. The battery electric vehicle (100) according to claim 1, wherein the first electrical component is a DC-DC converter (15) configured to increase voltage of electricity from an outside and supply the electricity to the battery (14).

3. The battery electric vehicle (100) according to claim 2, further comprising a charging port (17) that is a connection port for supplying electricity from the outside to the DC-DC converter (15),
wherein the charging port (17) is disposed at a height at which the DC-DC converter (15) is located.

4. The battery electric vehicle (100) according to any one of claims 1 to 3, further comprising a second electrical component (18) configured to operate using the electricity stored in the battery (14), the second electrical component (18) being an electronic device different from the first electrical component (15),
wherein the second electrical component (18) is disposed rearward of the first electrical component (15).

5. The battery electric vehicle (100) according to claim 4, wherein the second electrical component is a power supply device (18), and
the power supply device (18) is configured to distribute and supply the power from the battery (14) to each device connected to the power supply device (18).
